# EUROPEAN PATENT APPLICATION

(11) **EP 2 278 823 A2**
(43) Date of publication of application: **26.01.2011**
(21) Application number: 09169028.9
(22) Date of filing: 31.08.2009
(51) Int. Cl.: H04N 13/00, G06F 3/00, G06F 3/01

(54) **Stereo image interaction system**

(30) Priority: 20.07.2009 TW 98124377
(71) Applicant: J Touch Corporation, Taoyuan County (TW)
(72) Inventor: Yeh, Yu-Chou, Cambridge CB1 1AH, (GB)
(74) Representative: Horak, Michael

(57) **Abstract**

A stereo image interaction system includes a stereo image capturing module, a stereo image processing unit, a system host, and a stereo image display module. When the stereo image display module displays a stereo image, the stereo image capturing module obtains a motion image of an operation body, the stereo image processing unit obtains a motion characteristic from the motion image and transmits the motion characteristic to a central processing unit (CPU), and the CPU calculates a real-time motion of the stereo image under the motion characteristic. At this time, the stereo image displayed by the stereo image display module changes along with the motion characteristic, so that a virtual stereo image is displayed in a physical space, and the operation body is enabled to directly perform a real-time interaction on the stereo image. Furthermore, the displayed stereo image may be a first stereo image captured by the stereo image capturing module or a second stereo image pre-stored by a storage unit in the system host.

## Description

### BACKGROUND OF THE INVENTION

### Field of the Invention

The present invention relates to a stereo image interaction system, and more particularly to a stereo image interaction system for enabling a user to operate a stereo image in real time.

### Related Art

Currently, well-known technologies of stereo image display methods such as polarization division method, time division method, wavelength division method, and spatial division method are available (such stereo image display methods have already been disclosed, and are not an appeal of the present invention, so that the details thereof are not described herein again). The above four display methods all belong to an Eyeglass-type 3D system, in which viewers need to wear corresponding 3D glasses to view the displayed stereo images, and it is difficult to get popular among ordinary people. Therefore, the current stereo image display technology should develop towards a trend of achieving a free viewing space without wearing glasses. Recently, a naked-eye viewable 3D stereo image display method is realized through a lenticular sheet, a parallax barrier, a binocular parallax, or a slit source method.

As for the current real-time stereo image display technology, for example, in US Patent No. 6404913, entitled "Image Synthesizing Apparatus and Method, Position Detecting Apparatus and Method, and Supply Medium", a method for generating continuous stereo images is disclosed, in which a plurality of image pick-up devices is employed to capture a surface of an object. Then, the captured images are displayed in real time on a display such as a liquid crystal display (LCD) panel, and the displayed stereo images are made to be more vividly displayed through coordinate prediction and coordinate calculation. However, in this patent, though the stereo image is displayed, a user cannot directly edit the image, for example, zooming in/out or rotating the image. As a result, the user still needs to use devices such as a keyboard and a mouse to edit the stereo image.

Besides the above method for displaying a stereo image in a physical space, the technologies of displaying a stereo object in a plane image have already been available for years, such as various types of games or film animations where stereo objects are displayed on a plane. When a stereo object is displayed as a lifeless object, the design of its motion characteristic is quite easy; whereas if the stereo object is displayed as a live object, the design of its motion characteristic is rather complicated. Taking a human body for example, though a body motion can be realized through program calculation and simulation, the presented effects are rather stiff and unnatural.

Therefore, a technique of motion capture (Mocap) has been proposed. The common Mocap is generally classified into mechanical, acoustic, electromagnetic, and optical types in principle. In terms of the technology, the Mocap substantially means measuring, tracking, and recording motion tracks of an object in a 3D space. Here, only the most widely applied optical Mocap is briefly described below.

The optical Mocap is realized by monitoring and tracking a specific light spot on a target. Currently, most of the optical Mocap is based on the computer vision principle. Theoretically, as for one point in the space, as long as the point can be viewed simultaneously by two cameras, the position of the point in the space at a certain time point can be determined according to the images captured by the two cameras at the same time point and parameters of the two cameras. When the cameras continuously shoot images at a high speed, a motion track of the point can be obtained from the image sequence.

The optical Mocap is advantageous in that, the moving range of a performer is rather large without being confined by cables or mechanical devices, and the performer can perform freely, and the optical Mocap is quite convenient in use. Besides, the optical Mocap has a high sampling rate, and thus meets requirements of measuring high-speed movements in most occasions.

For example, in R.O.C. Patent No. I274295, entitled "Real-time Dynamic Image Capturing Method and Device", a real-time dynamic image capturing method for controlling video game roles is provided. First, a model of a control object is defined, and positions of marks on the model are confirmed. Next, a motion associated with the control object is captured and then interpreted, so as to change a state of the model. Afterwards, a role displayed on the display screen is controlled to move along with the change of the state of the model. In this patent, although the motion of a user can be captured in real time to control the image displayed on the screen, it is only limited to plane images, and stereo images can neither be displayed nor perform interactions with the user.

In US Patent No. 7340077, entitled "Gesture Recognition System Using Depth Perceptive Sensors", a plurality of sensors is used for recognizing a gesture, and an image displayed on a display is enabled to change along with the gesture. In this patent, although the motion of a user can be detected, it is only limited to the motions of the hands, instead of sensing the motions of all the parts of a human body.

In US Patent No. 6788809, entitled "System and Method for Gesture Recognition in Three Dimensions Using Stereo Imaging and Color Vision", a gesture recognition method is provided. First, image files associated with hands and fingers are set up in advance, and a database for joint nodes is then generated according to joint positions of a human body. Therefore, when a gesture is made, the gesture can be recognized precisely. In this patent, although the motion of a user can be detected, it is only limited to the motions of the hands, instead of sensing the motions of all the parts of a human body.

In US Patent No. 7274803, entitled "Method and System for Detecting Conscious Hand Movement Patterns and Computer-generated Visual Feedback for Facilitating Human-computer Interaction", a system and a method for detecting and analyzing movement patterns of individuals presented in front of a computer are provided, in which a plurality of video cameras is employed to obtain motion data and motion status of a user, and the obtained motion data and motion status are displayed on a display in real time. However, this patent fails to achieve direct interaction with the user, and is only limited to real-time Mocap, instead of interacting with applications such as games.

In US Patent No. 20060288313, entitled "Bounding Box Gesture Recognition on a Touch Detecting Interactive Display", a plurality of sensors in a sensing area is adjusted to provide a rectangular stereo sensing area, and gestures of a user are finished within the stereo area. As all the coordinates in the stereo area are pre-defined, the gesture recognition becomes much easier.

In US Patent No. 20080013793, entitled "Gesture Recognition Simulation System and Method", besides gesture recognition, a gesture image is generated precisely through a simulation control manner before the gesture recognition, and meanwhile a gesture is simulated in advance to achieve precise gesture recognition effects. However, the above two patents are mainly intended to make the gesture recognition more precise, and are simply advanced patents based on the gesture recognition technology, which have no interactive functions or applications.

In US Patent No. 7139685, entitled "Video-supported Planning of Equipment Installation and/or Room Design", a room planning and design system is provided. The system has a virtual room space, including a virtual representation of a physical room space, an object library of virtual objects, and a user interface. The virtual objects include virtual representations of equipment, machines, and other objects that may be placed in the room. The user interface includes a first user interface component and a second user interface component. The first user interface component is used for selecting the virtual objects from the virtual library and positioning the objects in the virtual room space. The second user interface component is used for manipulating the positions and orientations of the virtual objects within the virtual room space. In this patent, although the user is enabled to configure virtual objects in a virtual room space, the entire motions of the user still need to be performed by using external input devices, such as a touch panel, a keyboard, and a mouse, and still need to be presented by using a flat panel display. Therefore, all the interactive procedures are realized based on the image displayed on the display, and direct interactions between a stereo image and the user cannot be achieved.

In US Patent No. 20060033713, entitled "Interactive Video Based Games Using Objects Sensed by TV Cameras", the technique of Mocap is mainly adopted and integrated in a TV game player, and a plurality of stereo image video cameras is provided to obtain motions of a user, so as to enable the user to interact with a plane image presented on a display. Furthermore, US Patent No. 20060202953, entitled "Novel Man Machine Interfaces and Applications", is similar to the above patent. Therefore, such patent is only limited to interactions with a plane image, and if the displayed image is a stereo image, interactions with the stereo image may not be achieved.

For a stereo object displayed on a plane, the technique of Mocap may be adopted to perform real-time operation on the object. As known from the above, the stereo image display is an important displaying technique in the future, and a stereo image is displayed in a physical space after being projected by a stereo image display device. In other words, as for the user, the stereo image is a virtual stereo image at a position between the stereo image display device and the eyes of the user, and thus, when operating the stereo image, for example, rotating, stretching, decomposing, combining, deforming, or moving the image, the user may try to contact the virtual stereo image subconsciously, which is an intuitive reaction.

However, in the current operating techniques, a physical-contact input device, for example, a keyboard, a mouse, a trackball, or a touch panel, is still needed to operate a virtual stereo image, so that the above stereo image display techniques must adopt a physical-contact input device for operation.

In addition, although the real-time dynamic image capturing technique has been mentioned in the above patents, it is only limited to a stereo object displayed on a plane, instead of operating a stereo image displayed in a physical space. Therefore, how to enable a stereo image to change along with a body motion is a problem to be solved by the present invention.

### SUMMARY OF THE INVENTION

In order to solve the above problems, the inventor has designed a novel stereo image interaction system after careful studies based on long-term experience.

The present invention is directed to a stereo image interaction system, which is capable of obtaining an object image of an object and displaying the image as a stereo image.

The present invention is directed to a stereo image interaction system, which is capable of operating a stereo image in real time.

The present invention is directed to a stereo image interaction system, which is capable of directly contacting a stereo image and interacting with the stereo image.

The present invention is directed to a stereo image interaction system, which is capable of creating a stereo scenario.

The present invention is directed to a stereo image interaction system, which is capable of calculating a volume utilization ratio of a stereo space.

The present invention is directed to a stereo image interaction system, which is capable of enabling a plurality of operation bodies to operate a stereo image in real time.

In order to achieve the above objectives, the present invention provides a stereo image interaction system, which includes a stereo image capturing module, a stereo image processing unit, a system host, and a stereo image display module.

The stereo image capturing module is provided with one or more stereo image capturing units, for obtaining a plurality of object images of a predetermined object, and obtaining a motion image of an operation body.

The stereo image processing unit is electrically connected to the stereo image capturing units, for synthesizing the object images into a first stereo image, and obtaining a motion characteristic from the motion image.

The system host includes a central processing unit (CPU) electrically connected to the stereo image processing unit, and a storage unit electrically connected to the CPU.

The storage unit is predetermined with a second stereo image, and is used for storing the first stereo image.

The CPU is electrically connected to the stereo image processing unit, for calculating real-time motions of stereo images under the motion characteristic.

The stereo image display module is electrically connected to the CPU, for displaying the real-time motions of the stereo images.

When a stereo image is displayed, the stereo image capturing module obtains a motion image of the operation body, the stereo image processing unit obtains a motion characteristic from the motion image and transmits the motion characteristic to the CPU, and the CPU calculates a real-time motion of the stereo image under the motion characteristic. In this manner, the stereo image displayed by the stereo image display module changes along with the motion characteristic, so that a virtual stereo image is displayed in a physical space, and the operation body is enabled to directly perform real-time interaction on the stereo image.

It should be noted that, the stereo image capturing module may obtain a plurality of motion images of a plurality of operation bodies at the same time, the stereo image processing unit generates a plurality of motion characteristics according to the motion images, and the CPU calculates real-time motions of the stereo images under the motion characteristics.

In this specification, the operation body is defined as including five sensory organs and four limbs of a human body, game tools, and the like, besides the commonly known touch pens and fingers. That is to say, any object where a motion image and a motion characteristic thereof can be obtained by the stereo image capturing module falls within the scope of the operation body. Furthermore, the object is not defined to any specific configuration. Any object whose images can be captured and synthesized into a stereo image by the stereo image capturing module, for example, a human body, game tools, or facilities in daily life, falls within the scope of the object.

### BRIEF DESCRIPTION OF THE DRAWINGS

FIG. 1 is a block diagram of a preferred embodiment of the present invention;
FIG. 2 is a first flow chart of a preferred embodiment of the present invention;
FIG. 3 is a second flow chart of a preferred embodiment of the present invention;
FIG. 4 is a third flow chart of a preferred embodiment of the present invention;
FIG. 5 is a fourth flow chart of a preferred embodiment of the present invention;
FIG. 6 is a fifth flow chart of a preferred embodiment of the present invention;
FIG. 7 is a sixth flow chart of a preferred embodiment of the present invention;
FIG. 8 is a first schematic view of a preferred embodiment of the present invention;
FIG. 9 is a second schematic view of a preferred embodiment of the present invention;
FIG. 10 is a third schematic view of a preferred embodiment of the present invention;
FIG. 11 is a fourth schematic view of a preferred embodiment of the present invention;
FIG. 12 is a fifth schematic view of a preferred embodiment of the present invention;
FIG. 13 is a sixth schematic view of a preferred embodiment of the present invention; and
FIG. 14 is a seventh schematic view of a preferred embodiment of the present invention.

### DETAILED DESCRIPTION OF THE INVENTION

In order to make the content of the present invention more comprehensible, the present invention is described in detail below with reference to the accompanying drawings.

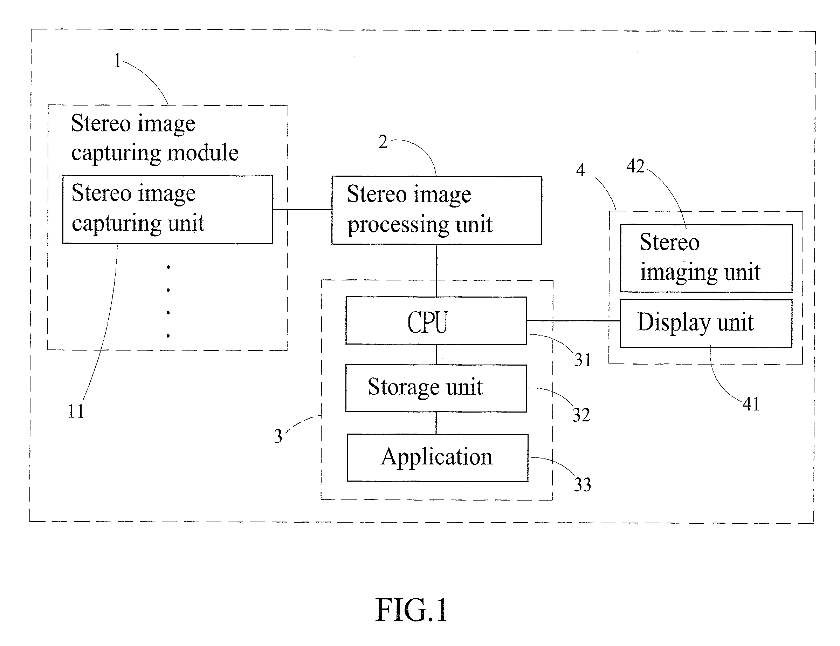

FIG. 1 is a block diagram of a preferred embodiment of the present invention. Referring to FIG. 1, a stereo image interaction system of the present invention includes a stereo image capturing module 1, a stereo image processing unit 2, a system host 3, and a stereo image display module 4.

The stereo image capturing module 1 is provided with one or more stereo image capturing units 11, for obtaining a plurality of object images of a predetermined object, and obtaining a motion image of an operation body. The stereo image capturing units 11 are charge-coupled devices (CCDs) or photo-sensitive devices formed by complementary metal-oxide semiconductors (CMOSs). Specifically, when the stereo image capturing units 11 are CCDs, the stereo image capturing units 11 are selected from a group consisting of linear CCDs, interline transfer CCDs, full-frame CCDs, and frame-transfer CCDs.

The stereo image processing unit 2 is electrically connected to the stereo image capturing units 11, for synthesizing the object images into a first stereo image, and obtaining a motion characteristic from the motion image.

The system host 3 includes a CPU 31 electrically connected to the stereo image processing unit 2, and a storage unit 32 electrically connected to the CPU 31.

The storage unit 32 is predetermined with a second stereo image, and used for storing the first stereo image. The storage unit 32 is also predetermined with one or more applications 33, and the applications 33 may include computer-aided design (CAD) 3D drawing software, image editing software, or the like. The storage unit 32 may be an HDD, a CD-ROM, a memory card, or a memory.

The CPU 31 is electrically connected to the stereo image processing unit 2, for calculating a real-time motion of the stereo image under the motion characteristic. For example, the stereo image is in a form of a triangle pyramid, and its tip portion points to a direct-viewing direction of the user's eyes. At this time, as the motion characteristic is from top to bottom, the triangle pyramid rotates accordingly, and a flat surface of its bottom portion faces the direct-viewing direction of the user's eyes. The above description is only an example for demonstrating the interaction relation between the stereo image and the motion characteristic, and others motions like rotating by any angle, amplification, horizontal or vertical movement, or deformation of the stereo image like stretching, depression, or distortion caused by the motion characteristic all fall within the protection scope of the present invention. The stereo image processing unit 2 calculates the real-time motion of the stereo image in a coordinate calculating mode, in which the so-called coordinate calculating mode involves common coordinate systems. The coordinate calculating mode is selected from a group consisting of a mode for calculating relative coordinates, a mode for calculating polar coordinates, a mode for calculating spherical coordinates, and a mode for calculating space coordinates.

Moreover, when a plurality of operation bodies is configured, the stereo image capturing module 1 obtains a plurality of motion images of the operation bodies, and transmits the motion images to the stereo image processing unit 2. The stereo image processing unit 2 generates a plurality of motion characteristics according to the motion images. The CPU 31 calculates real-time motions of the stereo image according to the motion characteristics.

In addition, the system host 3 may be a personal computer (PC), a notebook computer, or a game console, which is not limited herein. In actual applications, the stereo image processing unit 2 is in a form of an integrated circuit (IC) electrically connected to the CPU 31, or in a form of firmware recorded in the CPU 31, or in a form of software read and computed by the CPU 31, or in a form of an electronic circuit constituted by active and passive devices.

The stereo image display module 4 is provided with a display unit 41 and a stereo imaging unit 42 electrically connected to the display unit 41. The CPU 3 is electrically connected to the display unit 41.

The display unit 41 is used for displaying the real-time motion of the stereo image, and is selected from a group consisting of a cathode ray tube (CRT) display, a liquid crystal display (LCD), an organic light-emitting diode (OLED) display, a vacuum fluorescent display (VFD), a plasma display panel (PDP), a surface conduction electron-emitter (SED) display, a field emission display (FED), and an e-paper, which all fall within the scope of the display unit 41, but are not intended to limit the display unit 41. Specifically, when the display unit 41 is an LCD, the display unit 41 is selected from a group consisting of a twisted nematic (TN) LCD, a vertical alignment (VA) LCD, a multi-domain vertical alignment (MVA) LCD, a patterned vertical alignment (PVA) LCD, an in-plane switching (IPS) LCD, a continuous pinwheel alignment (CPA) LCD, and an optical compensated bend (OCB) LCD. When the display unit 41 is an OLED display, the display unit 41 is selected from a group consisting of an active matrix organic light emitting diode (AMOLED) display and a passive matrix organic light emitting diode (PMOLED) display.

When the display unit 41 generates a stereo image, the stereo imaging unit 42 receives and converts the stereo image into a multi-image, so that the stereo image is divided into images respectively received by the left eye and the right eye according to the characteristics of the eyes in receiving images. Then, the images are perceived and synthesized into the stereo image due to the parallax of the eyes. In addition, the stereo imaging unit 42 employs a light-grating structure or a lenticular sheet to divide the stereo image generated by the display unit 41 into the multi-image.

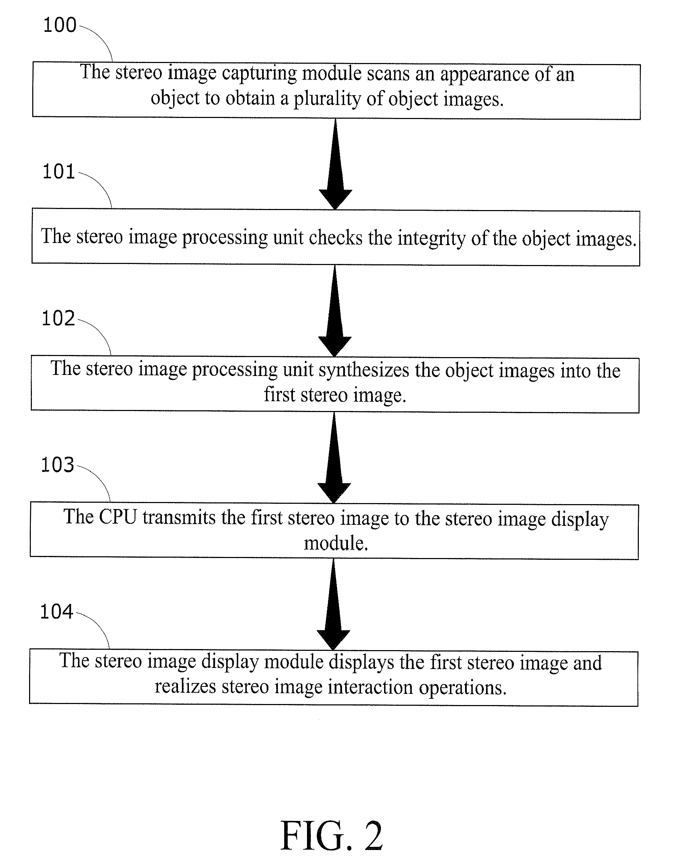

FIGs. 1 and 2 are respectively a block diagram and a first flow chart of a preferred embodiment of the present invention. Referring to FIGs. 1 and 2, the stereo image interaction system obtains the first stereo image in the following steps.

In Step 100, the stereo image capturing module scans an appearance of an object to obtain a plurality of object images.

In this step, when the stereo image capturing module 1 captures external images of the object, the object may be rotated horizontally, vertically, or at various angles, so that the stereo image capturing module 1 may obtain images of the object at different angles and generate a plurality of object images.

In Step 101, the stereo image processing unit checks the integrity of the object images.

In Step 102, the stereo image processing unit synthesizes the object images into the first stereo image.

In the above steps, the stereo image processing unit 2 checks the object images, and synthesizes the plurality of object images into the first stereo image through techniques such as the depth of field calculation and image stitching.

Meanwhile, in order to facilitate the subsequent operations, the stereo image processing unit 2 calculates a size of the first stereo image. That is, after the stereo image capturing module captures the object images, the stereo image processing unit 2 calculates a size of the first stereo image according to a proportion of an actual size of the object to that of the first stereo image.

In Step 103, the CPU transmits the first stereo image to the stereo image display module.

In Step 104, the stereo image display module displays the first stereo image and realizes stereo image interaction operations.

In the above steps, the CPU 31 receives and transmits the first stereo image to the display unit 41. The stereo imaging unit 42 converts the first stereo image into a multi-image, so that the stereo image is divided into images respectively received by the left eye and the right eye according to the characteristics of the eyes in receiving images. Then, the images are perceived and synthesized into the first stereo image due to the parallax of the eyes.

At this time, the user may perform zooming-in, zooming-out, and other operations on the first stereo image, and the first stereo image and the size thereof as well as other data of the first stereo image may be stored in the storage unit 32 for being played later on.

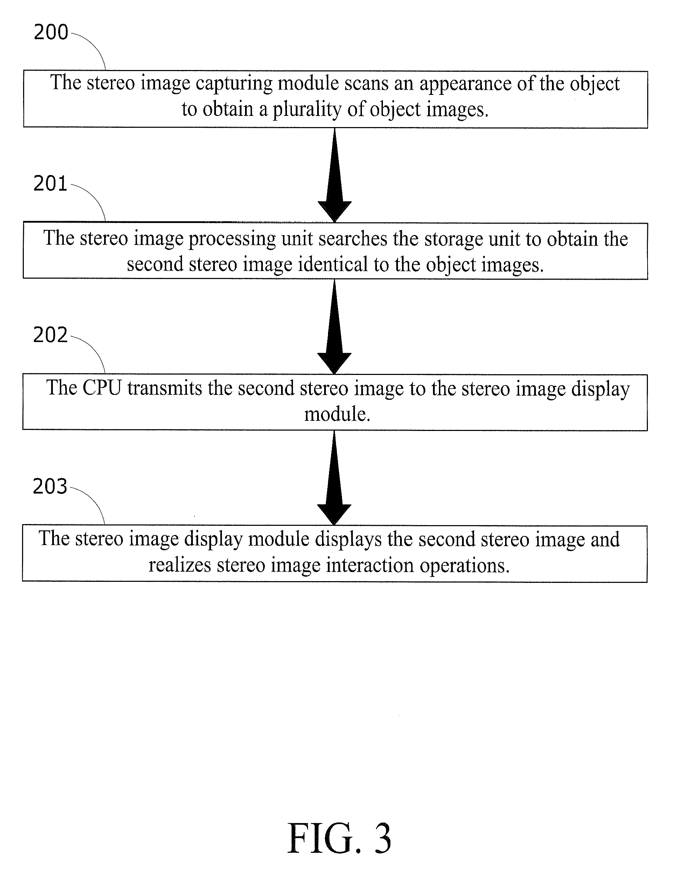

FIGs. 1 and 3 are respectively a block diagram and a second flow chart of a preferred embodiment of the present invention. Referring to FIGs. 1 and 3, the stereo image interaction system obtains the second stereo image in the following steps.

In Step 200, the stereo image capturing module scans an appearance of the object to obtain a plurality of object images.

In Step 201, the stereo image processing unit searches the storage unit to obtain the second stereo image identical to the object images.

In Step 202, the CPU transmits the second stereo image to the stereo image display module.

In Step 203, the stereo image display module displays the second stereo image and realizes stereo image interaction operations.

In the above steps, after the stereo image capturing module 1 scans the object and obtains the object images, the stereo image processing unit 2 directly compares characteristics of the object images, for example, profile and color, in the storage unit 32. When the object image of the object has already been stored in the storage unit 32, and it is exactly matched through comparison, the CPU 31 transmits the second stereo image (i.e., a stereo image of the object is pre-stored in the storage unit 32, and is referred to as a second stereo image) to the stereo image display module 4. Therefore, the second stereo image is displayed by the display unit 41 and the stereo imaging unit 42 into a stereo image that can be perceived by the eyes.

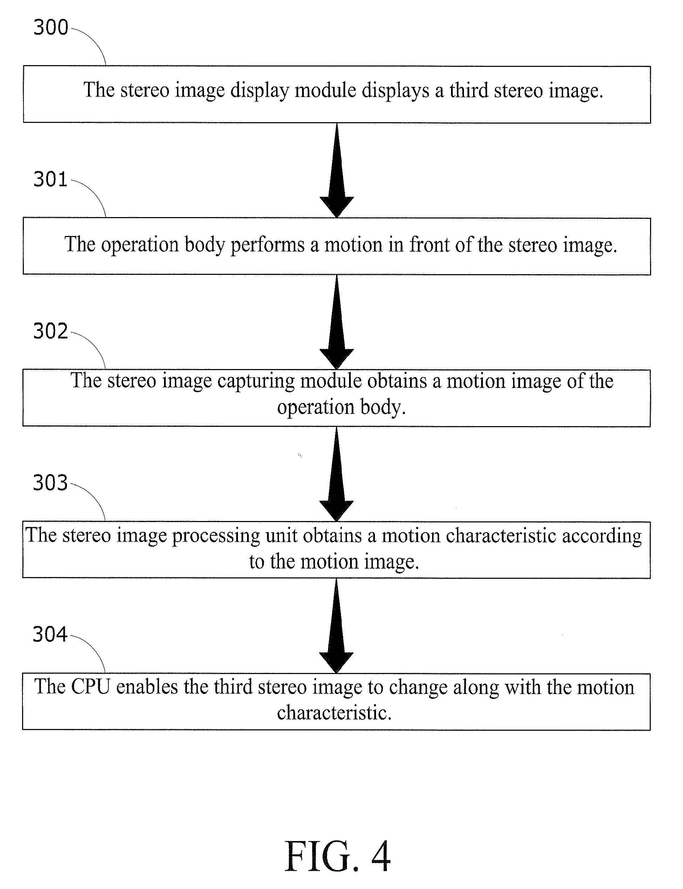

The acquisition and displaying operations of the stereo images have been illustrated with reference to FIGs. 2 and 3, and the interaction between the stereo image (i.e., the first stereo image or the second stereo image) and the operation body is described in FIG. 4.

FIGs. 1 and 4 are respectively a block diagram and a third flow chart of a preferred embodiment of the present invention. Referring to FIGs. 1 and 4, the stereo image interaction system performs stereo image interaction in the following steps.

In Step 300, the stereo image display module displays a third stereo image.

The displaying operation of the stereo image has already been described above in the steps shown in FIGs. 2 and 3, so the details thereof are not illustrated herein again. Furthermore, in practice, the third stereo image may also include the first stereo image or the second stereo image.

In Step 301, the operation body performs a motion in front of the stereo image.

In this step, besides commonly known touch pens and fingers, the operation body further includes five sensory organs and four limbs of a human body, game tools, and the like.

In Step 302, the stereo image capturing module obtains a motion image of the operation body.

In Step 303, the stereo image processing unit obtains a motion characteristic according to the motion image.

In the above steps, the stereo image capturing module 1 obtains the motion image of the operation body during the motion, and as the operation body may continuously produce motions, the stereo image processing unit 2 calculates the motion characteristic of the operation body according to the motion image. For example, if the motion image shows that the operation body moves from bottom to top, the stereo image processing unit calculates the motion characteristic of the operation body, and notifies the CPU 31 that the current motion characteristic of the operation body is moving from bottom to top. In addition, other motions including moving from left to right and rotating may generate corresponding motion characteristics.

In Step 304, the CPU enables the third stereo image to change along with the motion characteristic.

In the above step, upon receiving the motion characteristic, the CPU 31 matches the motion characteristic with a predetermined motion and enables the third stereo image to change along with the motion characteristic, and the third stereo image displayed by the stereo image display module 4 changes accordingly. For example, if the motion characteristic is from top to bottom, the third stereo image rotates up and down; alternatively, if the motion characteristic is to gradually increase a distance between two contacts, the third stereo image is amplified accordingly.

It should be noted that, in this embodiment, as for the motion corresponding to the motion characteristic, i.e., when the CPU 31 enables the third stereo image to change along with the motion characteristic, the motion status varies according to characteristics of the applications 33. In other words, as for the same motion characteristic and the third stereo image, various different motion changes may occur corresponding to different applications 33.

### Examples are given below for further explanation.

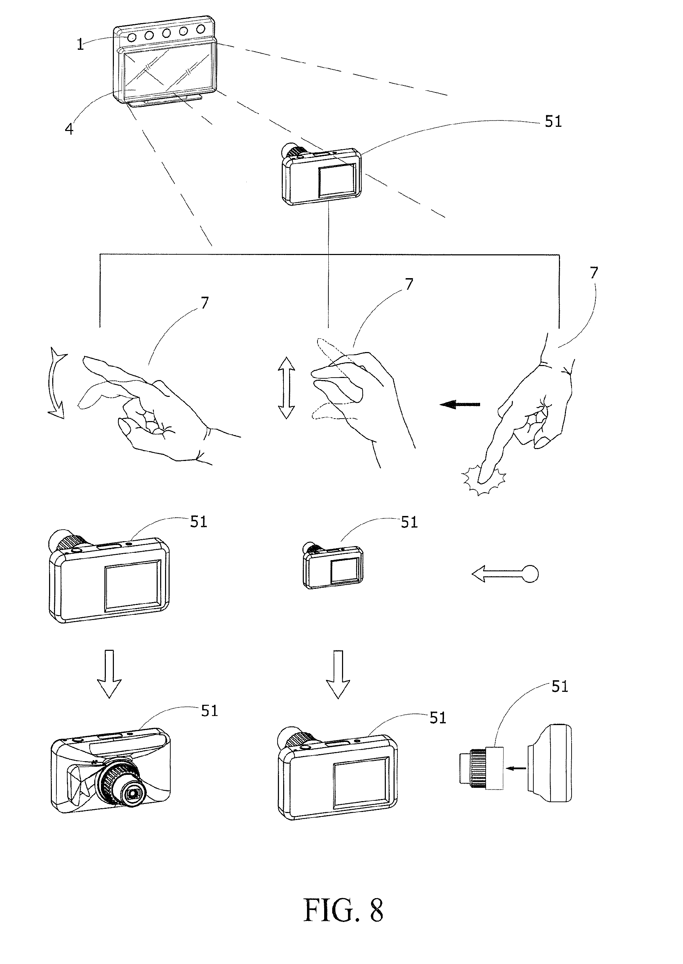

1. FIG. 8 is a first schematic view of a preferred embodiment of the present invention. When the application 33 is stereo image browsing software, the stereo image display module 4 displays a third stereo image 51. In FIG. 8, for ease of illustration, a single lens reflex (SLR) camera is taken as an example, and the operation body 7 is, for example, one hand of a human being.
   When the operation body 7 moves in a single direction, for example, moving from top to bottom, the application 33 receives a motion characteristic of moving from top to bottom, and the third stereo image 51 is enabled to rotate accordingly.
   When the operation body 7 makes a motion of gradually increasing a distance between two contacts, for example, the index finger and the thumb are firstly contacted with each other and then are gradually departed from each other, the application 33 receives a motion characteristic of increasing a distance between two contacts, and the third stereo image 51 is amplified accordingly.
   When the operation body 7 contacts at a single point and then moves, the stereo image capturing module 1 calculates the point on the third stereo image 51 where the operation body contacts and the moving distance thereof, and the application 33 enables the third stereo image 51 to be decomposed. In FIG. 8, the operation body 7 moves after contacting the lens of the third stereo image 51, so that the application 33 enables the third stereo image 51 to be decomposed.

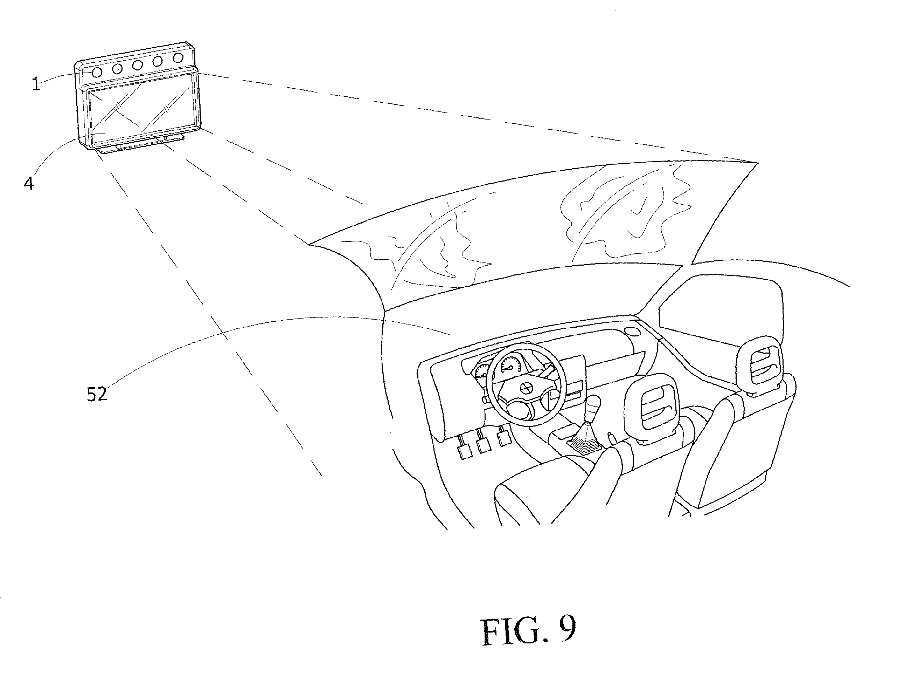

2. FIG. 9 is a second schematic view of a preferred embodiment of the present invention. When the application 33 is stereo scenario simulation software, a fourth stereo image 52 (it should be noted that, the fourth stereo image 52 only differs from the third stereo image 51 in the displayed stereo image, and the two images are distinguished from each other for ease of illustration) is used to simulate circumstances in real life. In FIG. 9, a driver's cabin in an automobile is taken as an example for illustration. The user contacts a stereo image of a steering wheel by hands or palms, and operates according to the displayed status. In this case, the stereo image capturing module 1 obtains a motion of the hands, for example, turning left/right or shifting gears, calculates a motion characteristic of the motion, and transmits the motion characteristic to the CPU 31, so that the fourth stereo image 52 is enabled to change along with the motion of the user. For example, when the user makes a motion of turning the steering wheel rightwards by hands, the steering wheel displayed on the stereo image is also turned rightwards, thus achieving the interaction between the user and the fourth stereo image 52.

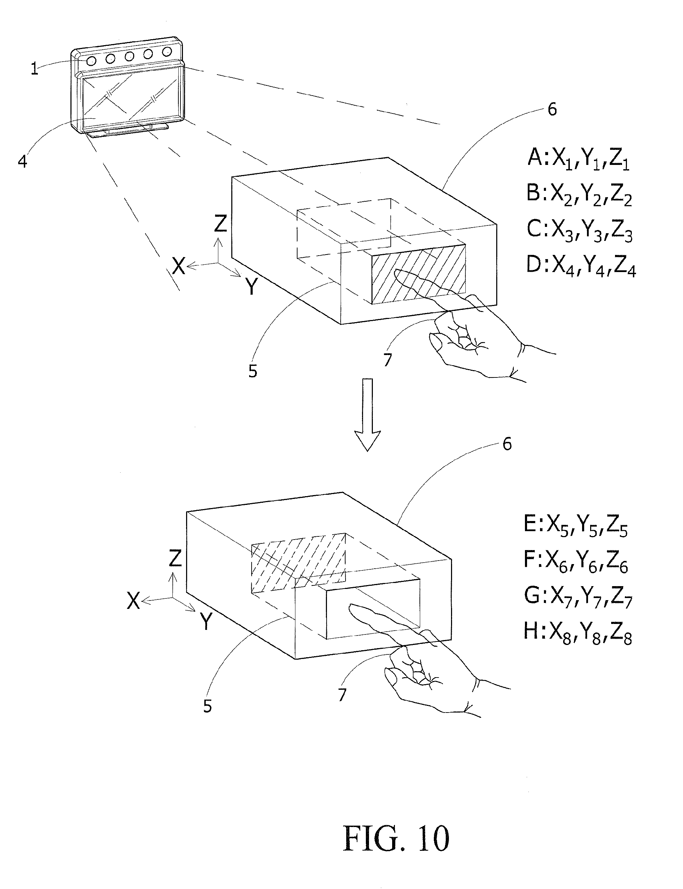

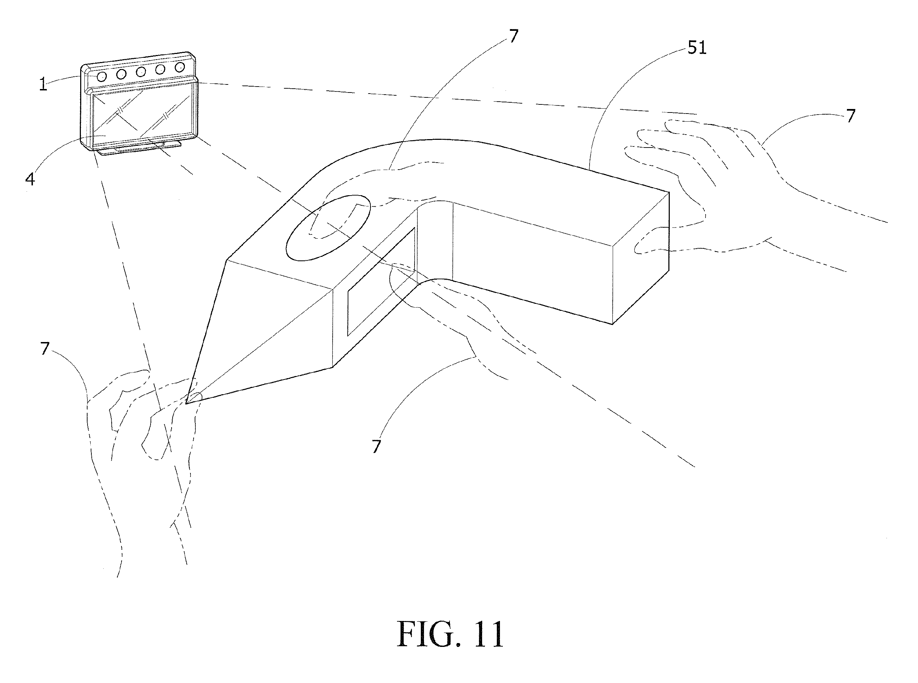

3. FIGs. 10 and 11 are respectively a third schematic view and a fourth schematic view of a preferred embodiment of the present invention. The application 33 is 3D stereo image processing software like CAD. Regardless of which specific motion characteristic is obtained, the corresponding motion change generally belongs to the applications of the CAD. For example, when the motion characteristic of the operation body 7 is to approach the third stereo image, the contact surface of the third stereo image 51 is gradually depressed in accordance with design instructions in the CAD including thin-shell, penetration, and depression.
4. When the application 33 is an electronic game, the operation body may include four limbs of a human body, corresponding game tools, or the like. For example, if the application 33 is an electronic fighting game, and the user shakes his/her fist in front of the third stereo image (for example, a boxer or a monster), the stereo image capturing module 1 obtains a motion image of the user, and the stereo image processing unit 2 calculates a motion characteristic indicating that the operation body has made a curved motion. Therefore, the third stereo image makes a response with a beaten motion (for example, bending backwards, backing off, or body twisting) according to the motion characteristic.
5. Referring to FIG. 11, in order to enable a plurality of users to operate at the same time, the stereo image capturing module 1 simultaneously scans or captures images of a plurality of operation bodies 7, obtains motion images of the operation bodies 7, and transmits the motion images to the stereo image processing unit 2. The stereo image processing unit 2 generates a plurality of motion characteristics according to the motion images, and the CPU 31 calculates real-time motions of the third stereo image 51 according to the motion characteristics. When the above process is applied to the application 33 such as a game or CAD, a plurality of users is enabled to operate at the same time.

It should be additionally mentioned that, as the third stereo image 51 and the fourth stereo image 52 are displayed by the stereo image display module 4 in a physical space, the user may view a stereo image of the object, but gets no feeling of physical contact when contacting the stereo image with a finger or by using other operation bodies 7. However, through the setting of the application 33, corresponding configuration changes may be achieved. Therefore, the application 33 is not limited to any specific configuration, and may be selected from a group consisting of CAD software, image browsing software, space design software, and various types of electronic games, which all fall within the scope of the present invention as long as the interaction between the user and the stereo image can be achieved.

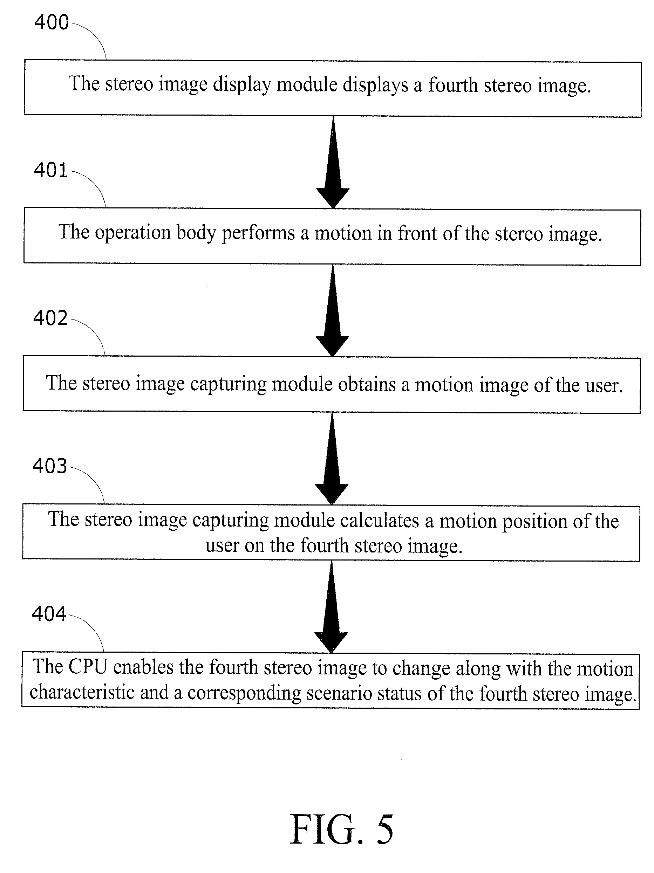

FIGs. 1 and 5 are respectively a block diagram and a fourth flow chart of a preferred embodiment of the present invention. Referring to FIGs. 1 and 5, the stereo image interaction system performs stereo scenario interaction in the following steps.

In Step 400, the stereo image display module displays a fourth stereo image.

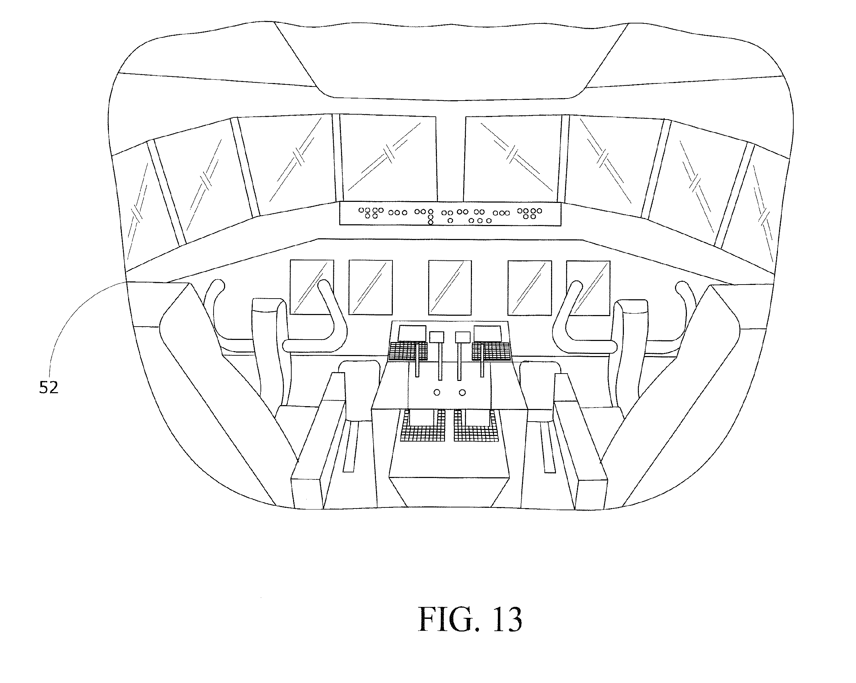

The displaying operation of the stereo image has already been described in the steps shown in FIGs. 2 and 3, so the details thereof are not illustrated herein again. Furthermore, in this embodiment, the fourth stereo image may be set as a virtual space of various configurations according to actual using conditions. For example, FIG. 9 is a second schematic view of a preferred embodiment of the present invention, in which the fourth stereo image 52 is displayed as a driver's cabin in an automobile, and FIG. 13 is a fifth schematic view of a preferred embodiment of the present invention, in which the fourth stereo image 52 is displayed as a pilot cabin in a plane. Definitely, the fourth stereo image is not limited to the simulation of scenarios within a transportation facility.

In Step 401, the operation body performs a motion in front of the stereo image.

In this step, the user may directly operate in front of the fourth stereo image 52. For example, as a driver's cabin in an automobile is displayed as shown in FIG. 9, the user views a virtual driver's cabin in an automobile, and contacts the steering wheel displayed on the fourth stereo image 52 with hands.

In Step 402, the stereo image capturing module obtains a motion image of the operation body.

In Step 403, the stereo image processing unit obtains a motion characteristic according to the motion image.

In Step 404, the stereo image capturing module calculates a motion position of the operation body on the fourth stereo image.

In the above steps, FIG. 9 is still taken as an example for illustration. When the user performs a motion on the fourth stereo image 52, the stereo image capturing module 1 obtains a motion image of the user's hands. The stereo image processing unit 2 calculates the motion of the hands, generates a corresponding motion characteristic, and transmits the motion characteristic to the CPU 31. The CPU 31 enables the fourth stereo image 52 to change accordingly through the setting of the application 33. For example, when the user performs a motion of holding and turning the steering wheel by hands, the steering wheel displayed on the fourth stereo image 52 is also turned accordingly; and when the user performs a motion of holding the gear lever for shifting gears, the gear lever displayed on the fourth stereo image 52 also moves accordingly.

In Step 405, the CPU enables the fourth stereo image to change along with the motion characteristic and a corresponding scenario status of the fourth stereo image.

In this step, not only the part of the fourth stereo image 52 where the user contacts changes accordingly, but also the entire scenario simulated by the fourth stereo image also changes accordingly. For example, if the fourth stereo image 52 simulates a moving vehicle, when the user turns the steering wheel, not only the image of the steering wheel is turned accordingly, but also the scenery displayed by the fourth stereo image 52 also changes with the turning of the steering wheel, thereby achieving the characteristics of virtual driving.

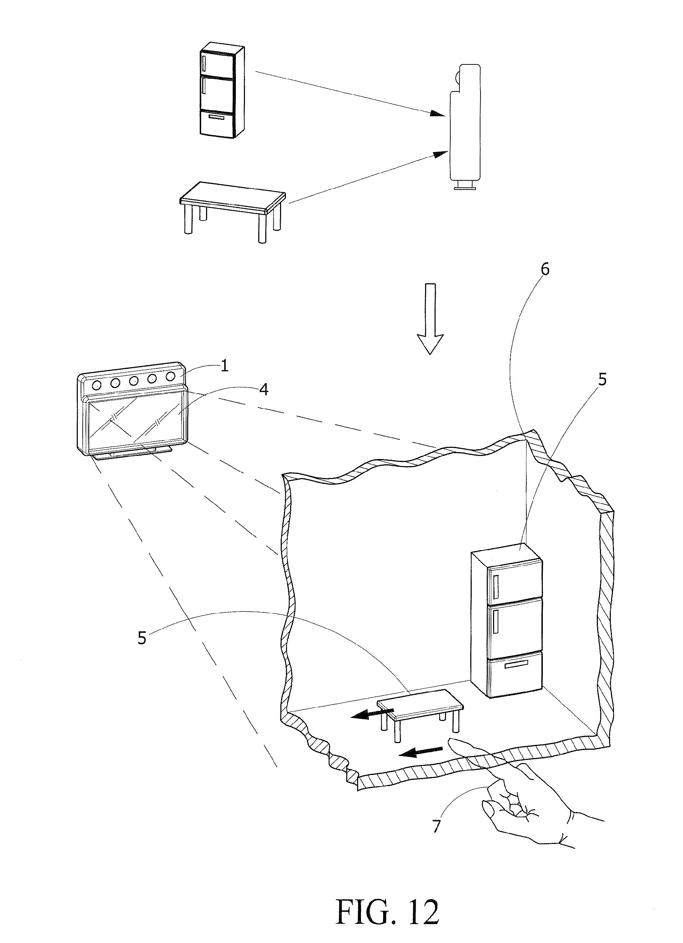

As mentioned above, the application 33 may also be interior design software. FIGs. 1 and 12 are respectively a block diagram and a fourth schematic view of a preferred embodiment of the present invention. Facilities used in daily life such as household appliance are scanned by the stereo image capturing module 1 and stored in the storage unit 32, or the images thereof are pre-stored in the storage unit 32.

When the application 33 is interior design software, the stereo image display module 4 displays a stereo space 6, in which the user can freely move a stereo image 5, i.e., a stereo image of the facilities used in daily life such as household appliance. Alternatively, when the stereo space 6 is displayed as a suitcase, packing box, or the like, the application 33 may be used for calculating the inner space to obtain the volume utilization ratio of the space.

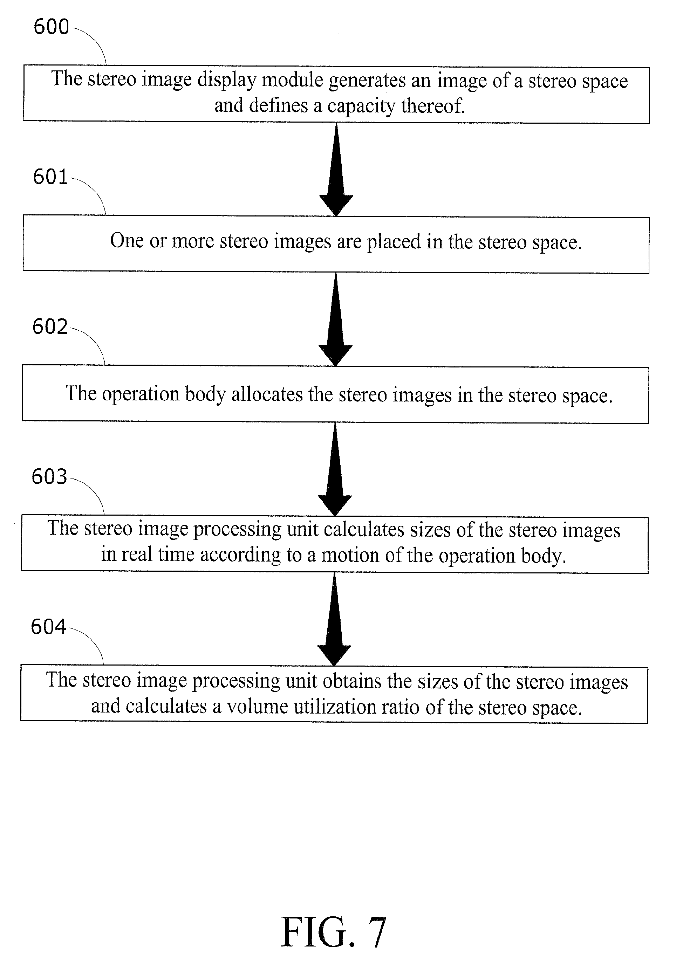

FIGs. 1, 7, and 12 are respectively a block diagram, a sixth flow chart, and a fifth schematic view of a preferred embodiment of the present invention. Referring to FIGs. 1, 7, and 12, the stereo image interaction system performs space calculation in the following steps.

In Step 600, the stereo image display module generates an image of a stereo space and defines a capacity thereof.

In this step, the image of the stereo space 6 is displayed as an inner space of a suitcase, house, vehicle, or container according to the actual requirements of the user. In FIG. 12, the stereo space 6 is displayed as an inner space of a room.

In Step 601, one or more stereo images are placed in the stereo space.

In Step 602, the operation body allocates the stereo images in the image of the stereo space.

In the above steps, the stereo image has already been described in FIG. 2 or 3, so the details thereof are not illustrated herein again, and the stereo image 5 may be the first stereo image or the second stereo image. Furthermore, in this embodiment, the stereo image 5 is displayed as a life facility such as a table or bookcase, and the operation body 7 can move the stereo image 5 at will.

Meanwhile, the size, shape, or placing angle of the stereo image 5 may be changed according to actual allocation requirements.

In Step 603, the stereo image processing unit calculates sizes of the stereo images in real time according to a motion of the operation body.

In this step, as the positions and sizes of the stereo images 5 change along with the operations of the user, the stereo image capturing module 1 changes the positions of the stereo images 5 displayed in the stereo space 6 correspondingly through the process shown in FIG. 4.

In Step 604, the stereo image processing unit obtains the sizes of the stereo images and calculates a volume utilization ratio of the stereo space.

In this step, the CPU 31 obtains size data of the stereo images 5, for example, information such as size data of the first stereo image generated after the scanning operation, or pre-stored size data of the second stereo image. Thus, the CPU 31 calculates the volume utilization ratio of the space according to the capacity of the stereo space 6 and the size of the stereo images 5.

FIGs. 1, 6, and 10 are respectively a block diagram, a fifth flow chart, and a third schematic view of a preferred embodiment of the present invention. Referring to FIGs. 1, 6, and 10, the stereo image interaction system calculates stereo coordinates in the following steps.

In Step 500, the stereo image display module defines a stereo space and displays the stereo image in the stereo space.

In this step, the stereo image display module 4 generates a stereo space 6 displayed as a stereo image according to a projection distance, area, and other space variables thereof. The stereo space 6 may be a spherical, rectangular, or sector-shaped area, and may adopt a corresponding coordinate system, for example, the spherical area adopts spherical coordinates, the rectangular area adopts polar coordinates or orthogonal coordinates, and the sector-shaped area adopts spherical coordinates or relative coordinates.

In Step 501, the stereo image capturing module senses a contact motion of the operation body in the stereo space.

In Step 502, the stereo image capturing module obtains a motion image of the operation body and calculates a motion characteristic.

In the above steps, the stereo image capturing module 1 senses whether the operation body 7 exists in the stereo space 6 or not, records the motion image of the operation body 7, and obtains the motion characteristic of the operation body 7 according to the motion image.

In Step 503, the CPU obtains coordinates of the motion characteristic according to pre-defined coordinates in the stereo space.

In Step 504, the CPU compares the coordinates of the motion characteristic with all coordinates contained in the stereo image to generate a corresponding coordinate change.

In the above steps, the CPU 31 compares with the coordinate system of the stereo space 6 based on the path, moving direction, and angle of the motion characteristic, so as to calculate an interactive relation between the motion characteristic and the stereo image 5, for example, the operation body 7 passing through the stereo image 5, or moving away from the stereo image 5, or being deformed correspondingly around the stereo image 5.

Then, the stereo image 5 is enabled to change accordingly based on the characteristics of the application 33. Referring to FIG. 10, a rectangular stereo space 6 is provided together with orthogonal coordinates, and a stereo image 5 is displayed. The stereo image 5 may be the first stereo image or the second stereo image mentioned with reference to FIG. 2 or 3.

As clearly seen from FIG. 10, the stereo image 5 is depressed. That is, the CPU 31 senses a motion characteristic of the stereo image 5 in a Y-axis direction, and the motion characteristic is a depression instruction according to the application 33, so that a depression is generated on the stereo image 5 in the Y-axis direction on the XY plane, and the depressed area is marked by shallow lines.

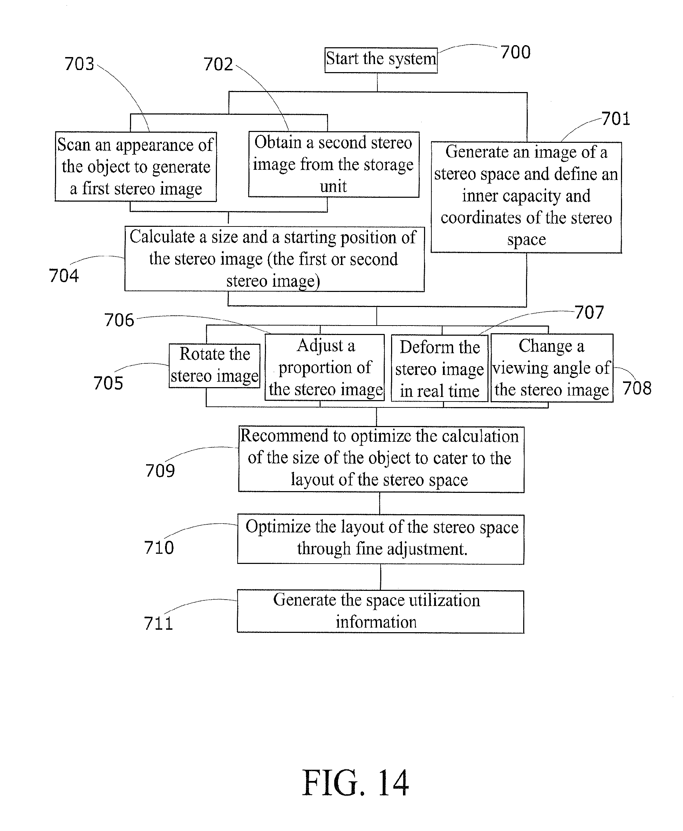

FIGs. 1 and 14 are respectively a block diagram and a seventh flow chart of a preferred embodiment of the present invention. In the flow chart of FIG. 14, the above processes are mainly integrated to describe the application of the present invention in calculating the space or capacity.

In Step 700, the system starts.

After the stereo image interaction system of the present invention is actuated, either Step 701 or Steps 702 to 703 may be performed first.

In Step 701, an image of a stereo space is generated, and an inner capacity and coordinates of the stereo space are defined.

In Step 701, the user selects the image of the stereo space to be displayed from the storage unit 32, and the stereo image display module 4 displays the selected image, and meanwhile defines a size and coordinates of the stereo space.

In Step 702, a second stereo image is obtained from the storage unit.

In Step 703, an appearance of the object is scanned to generate a first stereo image.

Steps 702 and 703 may be performed with reference to the description of the processes in FIGs. 2 and 3, and it should be noted that, Steps 702 and 703 may be performed at different sequences or only one of the two steps is selectively performed.

In Step 704, a size and a starting position of the stereo image (the first or second stereo image) are calculated.

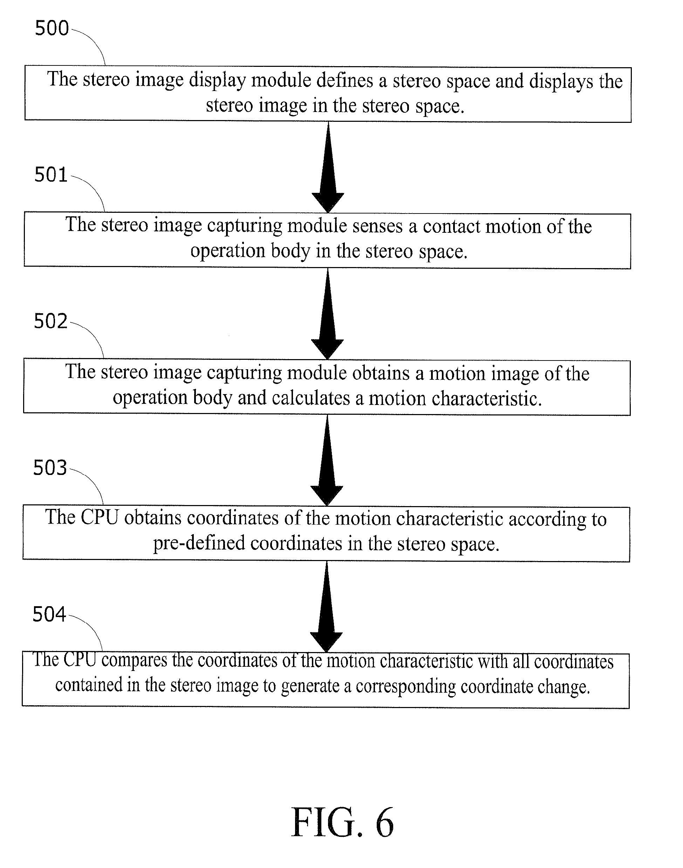

In Step 704, as the user has already selected the desired stereo image, the CPU 31 defines the position of the stereo image to be placed in the stereo space according to the pre-defined size, position, and coordinates of the stereo space, which may be known with reference to a part of the process in FIG. 6.

In Step 705, the stereo image is rotated.

In Step 706, a proportion of the stereo image is adjusted.

In Step 707, the stereo image is deformed in real time.

In Step 708, a viewing angle of the stereo image is changed.

Steps 705 to 708 may be selectively performed by the user according to actual using requirements, and descriptions about Steps 705 to 708 may be obtained with reference to the process in FIG. 8.

In Step 709, it is recommended to optimize the calculation of the size of the object to cater to the layout of the stereo space.

In Step 709, as the user has completely allocated the desired stereo images in the stereo space, including the sizes, positions, disposing angles, and heights of the stereo images, the CPU 31 may calculate a volume utilization ratio of the space according to the capacity of the stereo space and the sizes of the stereo images.

In Step 710, the layout of the stereo space is optimized through fine adjustment.

In Step 710, after the CPU 31 completes the calculation of the volume utilization ratio of the stereo space, the user may perform fine adjustment on the positions of the stereo images according to actual using requirements, or re-allocate the stereo images and perform computation when getting dissatisfied with the space allocation.

In Step 711, the space utilization information is generated.

In Step 711, the stereo image interaction system of the present invention has completed the calculation of the volume utilization ratio or capacity of the space, and data associated with the stereo space is generated, for example, whether the spaces between the stereo images are appropriate (which is applicable to an interior design), and whether the stereo images can fill up the stereo space (which is applicable to a warehouse, container, wagon, suitcase, or the like) during the allocation of the stereo space.

The above descriptions are only illustrative, but not intended to limit the present invention. It is apparent to those skilled in the art that various modifications and variations can be made to the structure of the present invention without departing from the scope or spirit of the present invention. In view of the foregoing, it is intended that the present invention cover modifications and variations of the present invention provided they fall within the scope of the following claims and their equivalents.

In view of the above, the stereo image interaction system of the present invention has the creative step and industrial applicability, so that the present application is filed for an invention patent according to the provisions of the Patent Act.

## Claims

1. A stereo image interaction system, particularly a stereo image interaction system capable of displaying a stereo image and controlling the stereo image by using a touch body, the system comprising:
a stereo image capturing module, provided with one or more stereo image capturing units, for obtaining a plurality of object images of a predetermined object, and obtaining a motion image of an operation body;
a stereo image processing unit, electrically connected to the stereo image capturing units, for synthesizing the object images into a first stereo image, and obtaining a motion characteristic from the motion image;
a system host, comprising a central processing unit (CPU) electrically connected to the stereo image processing unit, and a storage unit electrically connected to the CPU, wherein:
the storage unit is used for storing the first stereo image; and
the CPU is electrically connected to the stereo image processing unit, for calculating a real-time motion of the stereo image under the motion characteristic; and
a stereo image display module, electrically connected to the CPU, for displaying the real-time motion of the stereo image.

2. The stereo image interaction system according to claim 1, wherein a plurality of operation bodies is configured, the stereo image capturing module obtains motion images of the operation bodies, and the stereo image processing unit generates a corresponding number of motion characteristics according to the motion images.

3. The stereo image interaction system according to claim 1, wherein the stereo image capturing units are charge coupled devices (CCDs) or photo-sensitive devices formed by complementary metal oxide semiconductors (CMOSs).

4. The stereo image interaction system according to claim 3, wherein the stereo image capturing units are CCDs selected from a group consisting of linear CCDs, interline transfer CCDs, full-frame CCDs, and frame-transfer CCDs.

5. The stereo image interaction system according to claim 1, wherein the stereo image processing unit is in a form of an integrated circuit (IC) electrically connected to the CPU, or in a form of firmware recorded in the CPU, or in a form of software read and computed by the CPU, or in a form of an electronic circuit constituted by active and passive devices.

6. The stereo image interaction system according to claim 1, wherein the stereo image display module comprises a stereo imaging unit and a display unit,
the display unit is electrically connected to the CPU, for displaying the stereo image; and
the stereo imaging unit is disposed on a surface of the display unit, for converting the stereo image into a multi-image, and the multi-image is made to generate the stereo image after being perceived by eyes.

7. The stereo image interaction system according to claim 6, wherein the stereo imaging unit has a structure selected from a group consisting of an active lens structure, a lenticular lens structure, a liquid crystal (LC) lens structure, an LC barrier structure, a light grating structure, and a lenticular sheet.

8. The stereo image interaction system according to claim 6, wherein the display unit is selected from a group consisting of a cathode ray tube (CRT) display, a liquid crystal display (LCD), an organic light-emitting diode (OLED) display, a vacuum fluorescent display (VFD), a plasma display panel (PDP), a surface conduction electron-emitter (SED) display, a field emission display (FED), and an e-paper.

9. The stereo image interaction system according to claim 8, wherein the display unit is an LCD selected from a group consisting of a twisted nematic (TN) LCD, a vertical alignment (VA) LCD, a multi-domain vertical alignment (MVA) LCD, a patterned vertical alignment (PVA) LCD, an in-plane switching (IPS) LCD, a continuous pinwheel alignment (CPA) LCD, and an optical compensated bend (OCB) LCD.

10. The stereo image interaction system according to claim 8, wherein the display unit is an OLED display selected from a group consisting of an active matrix organic light emitting diode (AMOLED) display and a passive matrix organic light emitting diode (PMOLED) display.

11. The stereo image interaction system according to claim 1, wherein the stereo image processing unit calculates the real-time motion of the stereo image in a coordinate calculating mode selected from a group consisting of a mode for calculating relative coordinates, a mode for calculating polar coordinates, a mode for calculating spherical coordinates, and a mode for calculating space coordinates.

12. The stereo image interaction system according to claim 1, wherein the first stereo image is obtained in the following steps:
scanning an appearance of the object by the stereo image capturing module to obtain a plurality of object images;
checking an integrity of the object images by the stereo image processing unit;
synthesizing the object images into the first stereo image by the stereo image processing unit;
transmitting the first stereo image to the stereo image display module by the CPU; and
displaying the first stereo image and realizing stereo image interaction by the stereo image display module.

13. The stereo image interaction system according to claim 12, wherein the step of scanning the appearance of the object by the stereo image capturing module to obtain the plurality of object images further comprises vertical scanning or horizontal scanning.

14. The stereo image interaction system according to claim 12, wherein the step of synthesizing the object images into the first stereo image by the stereo image processing unit further comprises:
calculating a size of the first stereo image by the stereo image processing unit.

15. The stereo image interaction system according to claim 14, wherein the stereo image processing unit calculates the size of the first stereo image according to a proportion of the object images obtained by the stereo image capturing module.

16. The stereo image interaction system according to claim 1, wherein the storage unit is predetermined with a second stereo image.

17. The stereo image interaction system according to claim 16, wherein the second stereo image is obtained in the following steps:
scanning an appearance of the object by the stereo image capturing module to obtain a plurality of object images;
searching the storage unit by the stereo image processing unit to obtain the second stereo image identical to the object images;
transmitting the second stereo image to the stereo image display module by the CPU; and
displaying the second stereo image and realizing stereo image interaction by the stereo image display module.

18. The stereo image interaction system according to claim 1, wherein stereo image interaction is realized in the following steps:
displaying a third stereo image by the stereo image display module;
performing a motion by the operation body in front of the stereo image;
obtaining a motion image of the operation body by the stereo image capturing module;
obtaining a motion characteristic by the stereo image processing unit according to the motion image; and
enabling the third stereo image to change along with the motion characteristic by the CPU.

19. The stereo image interaction system according to claim 18, wherein the third stereo image is the first stereo image or the second stereo image predetermined in the storage unit.

20. The stereo image interaction system according to claim 1, wherein stereo scenario interaction is realized in the following steps:
displaying a fourth stereo image by the stereo image display module;
performing a motion by the operation body in front of the stereo image;
obtaining a motion image of the operation body by the stereo image capturing module;
obtaining a motion characteristic by the stereo image processing unit according to the motion image;
calculating a motion position of the operation body on the fourth stereo image by the stereo image capturing module; and
enabling the fourth stereo image to change along with the motion characteristic and a corresponding scenario status of the fourth stereo image by the CPU.

21. The stereo image interaction system according to claim 1, wherein stereo coordinates are calculated in the following steps:
defining a stereo space and displaying the stereo image in the stereo space by the stereo image display module;
sensing a contact motion of the operation body in the stereo space by the stereo image capturing module;
obtaining a motion image of the operation body by the stereo image capturing module and calculating a motion characteristic;
obtaining coordinates of the motion characteristic by the CPU according to pre-defined coordinates in the stereo space; and
comparing the coordinates of the motion characteristic with all coordinates contained in the stereo image by the CPU to generate a corresponding coordinate change.

22. The stereo image interaction system according to claim 21, wherein the step of comparing the coordinates of the motion characteristic with all coordinates contained in the stereo image by the CPU to generate the corresponding coordinate change further comprises:
the coordinates of the motion characteristic passing through all coordinates contained in the stereo image; and
depressing a shape of the stereo image.

23. The stereo image interaction system according to claim 21, wherein the step of comparing the coordinates of the motion characteristic with all coordinates contained in the stereo image by the CPU to generate the corresponding coordinate change further comprises:
the coordinates of the motion characteristic moving away from all coordinates contained in the stereo image; and
stretching a shape of the stereo image.

24. The stereo image interaction system according to claim 1, wherein a space calculation is performed in the following steps:
generating an image of a stereo space and defining a capacity thereof by the stereo image display module;
placing one or more stereo images in the stereo space;
allocating the stereo images in the stereo space by the operation body; and
obtaining sizes of the stereo images and calculating a volume utilization ratio of the stereo space by the stereo image processing unit.

25. The stereo image interaction system according to claim 24, wherein the stereo image is the first stereo image or a second stereo image predetermined in the storage unit.

26. The stereo image interaction system according to claim 25, wherein if the stereo image is the first stereo image, after the stereo image processing unit generates the first stereo image, the CPU calculates a size of the first stereo image.

27. The stereo image interaction system according to claim 25, wherein if the stereo image is the second stereo image, the CPU obtains a size of the second stereo image when the second stereo image is stored.

28. The stereo image interaction system according to claim 24, wherein in the step of allocating the stereo images in the stereo space by the operation body, the stereo image processing unit calculates the size of the stereo images in real time according to a motion of the operation body.
